# EUROPÄISCHE PATENTSCHRIFT

(11) **EP 1 160 109 B1**
(45) Veröffentlichungstag und Bekanntmachung des Hinweises auf die Patenterteilung: **21.02.2007**
(21) Anmeldenummer: 01113113.3
(22) Anmeldetag: 29.05.2001
(51) Int. Cl.: B60J 1/18

(54) **Haltevorrichtung für eine Fahrzeugscheibe**
Retaining device for a vehicle window pane
Dispositif de fixation pour une vitre de fenêtre d'un véhicule

(30) Priorität: 31.05.2000 DE 10027127
(43) Veröffentlichungstag der Anmeldung: 05.12.2001
(73) Patentinhaber: Wilhelm Karmann GmbH, 49084 Osnabrück (DE)
(72) Erfinder: Hüdepohl, Stefan, 49143 Bissendorf (DE)
(74) Vertreter: Busse & Busse Patentanwälte

(56) Entgegenhaltungen:
- DE-A- 4 210 487
- DE-A- 4 240 281
- DE-A- 19 837 411

## Beschreibung

Die Erfindung betrifft eine Haltevorrichtung für eine Fahrzeugscheibe, insbesondere eine aus Festglas bestehende Heckscheibe eines Cabriolet-Fahrzeugs, gemäß dem Oberbegriff des Anspruchs 1.

Bei einer bekannten Haltevorrichtung für eine Fahrzeugscheibe (DE 43 41 079 A1) ist ein die flexible Dachhaut des Faltverdecks aufnehmender Tragrahmen vorgesehen, der über jeweilige Gewindestifte mit dem die Heckscheibe abstützenden Scheibenrahmen verbunden wird. Von diesem Verbindungsteil werden gleichzeitig sämtliche weitere Halte- und Dichtungsteile der Dachhaut in einer Durchgriffsstellung erfaßt, so daß diese mehrlagige Anbindung der Teile bei aufwendiger Montage bei einer Reparatur im Bereich der Heckscheibe eine Demontage sämtlicher Anbindungsteile erfordert. Die Handhabung ist dabei erschwert, da der Scheibenrahmen in das Innere des Fahrzeugs nach unten zu verlagern ist und dabei die Anbindungsteile sämtlich aus ihrer Verbindungsstellung herunterfallen können. Auch bei einer Befestigung gemäß DE 41 29 492 A1 treten die vorbeschriebenen Nachteile auf.

Aus der DE-A-42 10 487 ist eine Haltevorrichtung für eine Fahrzeugscheibe der eingangs genannten Art bekannt. Hierbei sind der Scheibenrahmen der Heckscheibe und der Tragrahmen, an dem der Dachbezug angebunden ist, über einen Gewindebolzen unter Zwischenlage eines Dichtelementes und einer Befestigungsmutter aneinander festgelegt. Nachteilig hierbei ist, daß ähnlich wie bei der Vorrichtung nach der DE-A-43 41 079 bei einer Reparatur im Bereich der Heckscheibe eine Demontage sämtlicher Anbindungsteile erforderlich ist. Somit ist auch hier die Handhabung erschwert.

Die Erfindung befaßt sich mit dem Problem, eine Haltevorrichtung für eine Heckscheibe eines Cabriolet-Fahrzeuges zu schaffen, die bei einer einfacheren Montage sämtlicher Anbindungsteile eine Reparatur im Bereich der Heckscheibe mit geringem Aufwand ermöglicht und optisch ansprechend gestaltet ist.

Die Erfindung löst diese Aufgabe mit einer Haltevorrichtung für die Heckscheibe mit den kennzeichnenden Merkmalen des Anspruchs 1. Hinsichtlich wesentlicher weiterer Ausgestaltungen der erfindungsgemäßen Haltevorrichtung wird auf die Ansprüche 2 bis 15 verwiesen.

Die erfindungsgemäße Haltevorrichtung weist zur Aufnahme der Fahrzeugscheibe und sämtlicher Anbindungsteile einen zentralen Verbindungsprofilkörper auf, an dem diese und der Scheibenrahmen mit der Heckscheibe so festlegbar sind, daß bei einfacher Handhabung und Montage der Herstellungsaufwand verringert ist und die Demontage einzelner Teile die Austauschbarkeit und Reparatur wesentlich vereinfacht.

Mit dem Verbindungsprofilkörper können die einzelnen Anbindungsteile in einer weitgehend beliebigen Reihenfolge verbunden werden, wobei insbesondere Klemm- und Steckverbindungen den Montageprozeß vereinfachen. Auch der Scheibenrahmen mit der Heckscheibe als Montageeinheit kann am Verbindungsprofilkörper über eine Schraub- oder Steckverbindung so festgelegt werden, daß diese Einheit von der Außenseite des Verdecks zugänglich und ein schneller Wechsel der insbesondere aus Festglas bestehenden Scheibe möglich ist.

In vorteilhafter Ausführung wird zwischen Scheibenrahmen und Verbindungsprofilkörper ein Dichtungsband so festgelegt, daß dieses einerseits am Scheibenrahmen angeklebt ist und andererseits auf dem Verbindungsrand der Dachhaut so aufliegt, daß optimal zusammenwirkende Dichtflächen gebildet sind.

Mit dem Verbindungsprofilkörper werden im Bereich der jeweiligen Steckverbindungen bzw. Klemmverbindungen aus dem Verdeck abgeleitete Spannungen so aufgenommen, daß punktuelle Belastungen, wie beispielsweise im Bereich von Haltebohrungen, Schraubstiften o. dgl. bei bekannten Konstruktionen, mit dem neuen Verbindungsaufbau vermieden sind. Über entsprechende an den Anbindungsteilen vorgesehene Befestigungskanäle und Stützschenkel am Verbindungsprofilkörper ist ein formschlüssiger Verbindungsaufbau erreicht, der punktuelle Belastungen vermeidet und damit die Langzeitstabilität der Haltevorrichtung verbessert.

Die Dachhaut kann im Bereich ihrer Polstermatte bis an den Verbindungsprofilkörper heran und damit in den Nahbereich der Heckscheibe geführt werden, so daß eine Verbesserung der Innenraumakustik und der thermischen Isolierung erreicht ist. Die Polstermatte untergreift dabei auch den im Nahbereich der Heckscheibe befindlichen Eckspriegel des Verdeckgestells, so daß dieser zusätzlich gespannt wird und der hintere Bereich des Faltverdecks eine optisch ansprechende Aussteifung erfährt.

Die Montage des als Verkleidung vorgesehenen Innenhimmels wird mittels des Verbindungsprofilkörpers insgesamt vereinfacht. Durch die Vormontage der Heckscheibe mit dem Schreibenrahmen als Montageeinheit sind Wartezeiten während des Einbaus der Gesamtkonstruktion vermieden und die Produktivität ist insgesamt erhöht.

Hinsichtlich weiterer Einzelheiten und Vorteile der Erfindung wird auf die nachfolgende Beschreibung und die Zeichnung verwiesen, in der die erfindungsgemäße Haltevorrichtung für die Heckscheibe anhand zweier Ausführungsbeispiele näher erläutert ist. In der Zeichnung zeigen:
- Fig. 1: eine perspektivische Heckansicht eines Cabriolet-Fahrzeuges mit einem eine Heckscheibe aufweisenden Faltverdeck in Schließstellung,
- Fig. 2: eine vergrößerte Schnittdarstellung im Übergangsbereich von Heckscheibe und Dachhaut, und
- Fig. 3: eine Schnittdarstellung ähnlich Fig. 2 mit der Haltevorrichtung in einer zweiten Ausführung.

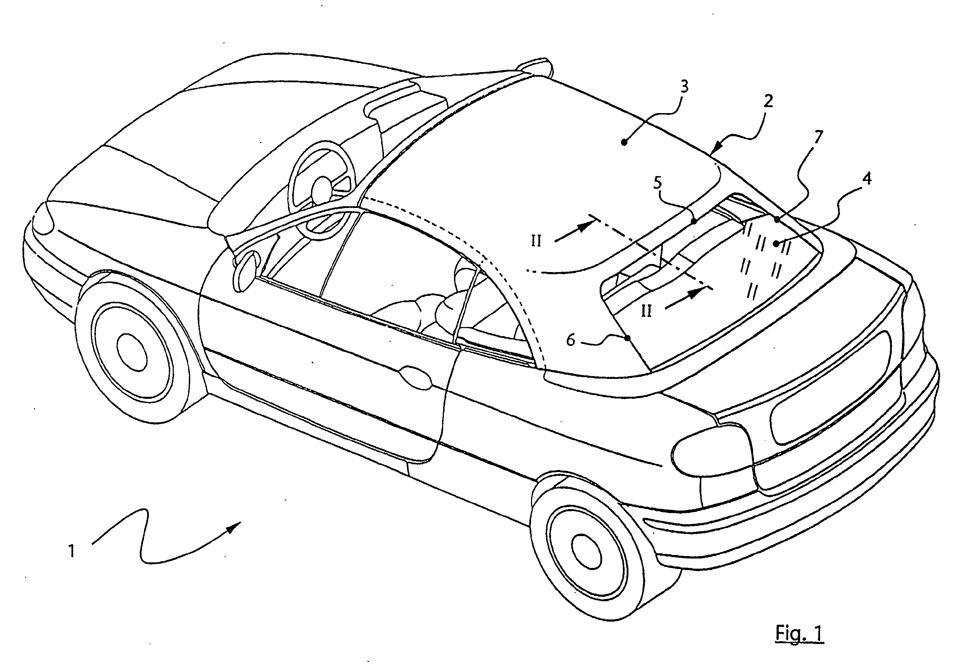

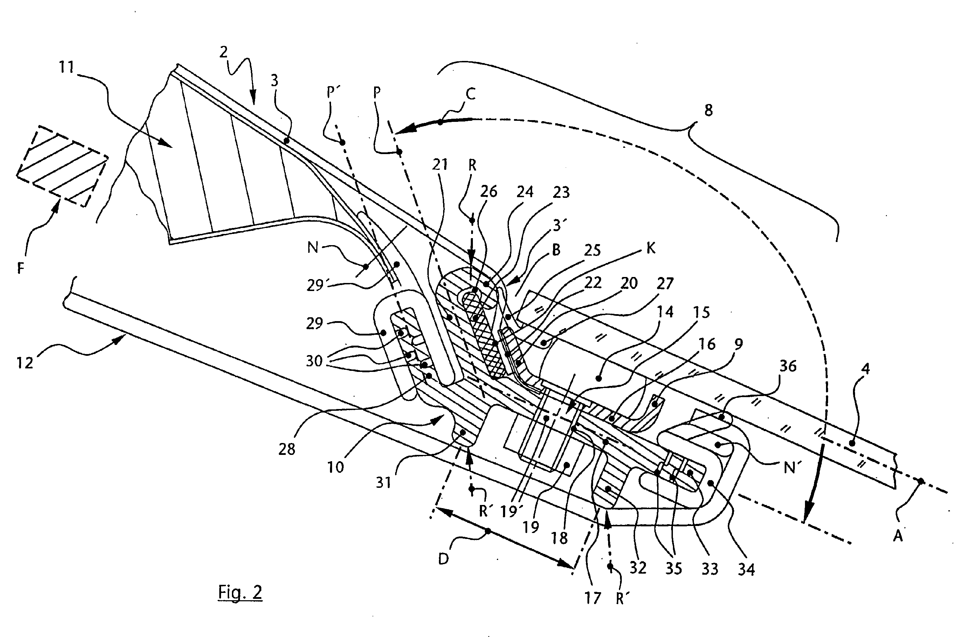

In Fig. 1 ist ein insgesamt mit 1 bezeichnetes Cabriolet-Fahrzeug dargestellt, dessen Faltverdeck 2 eine flexible Dachhaut 3 aufweist, die im heckseitigen Bereich mit einer insbesondere aus Festglas bestehenden Heckscheibe 4 versehen ist. Diese Heckscheibe 4 weist eine in Fig. 2 in einer Schnittdarstellung veranschaulichte und die Heckscheibe 4 zumindest im Bereich des oberen Querseitenrandes 5 sowie der beiden Längsseitenränder 6 und 7 umfassende Haltevorrichtung 8 auf, die in mehrteiliger Ausführung an sich bekannter Art mit einem Tragrahmen und einem die Heckscheibe 4 abstützenden Scheibenrahmen 9 versehen wird.

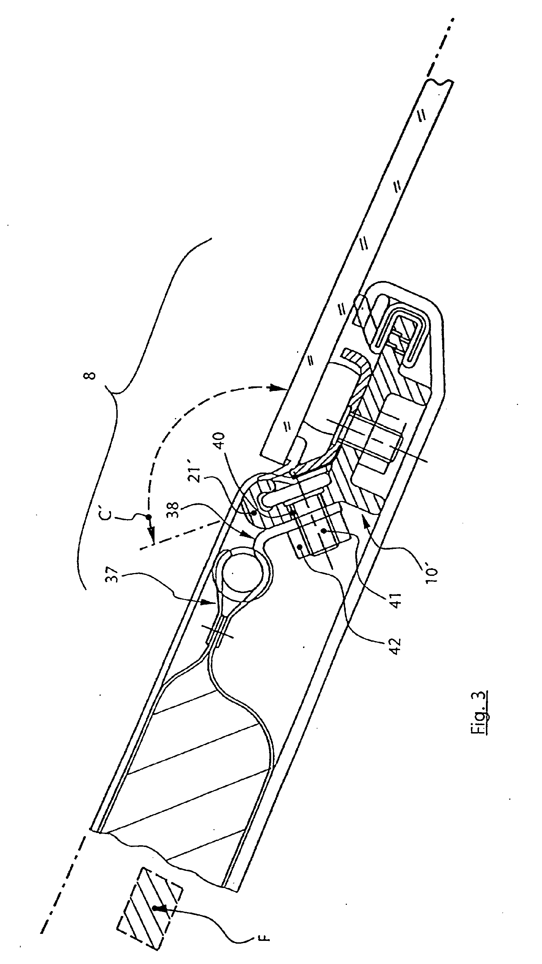

Bei der erfindungsgemäßen Haltevorrichtung 8 ist der Tragrahmen als ein sämtliche Anbindungsteile des Verdecks 2 bzw. der Dachhaut 3 und den Scheibenrahmen 9 mit Heckscheibe 4 als Montageeinheit abstützender Verbindungsprofilkörper 10 (10'; zweite Ausführung gemäß Fig. 3) ausgebildet. Als Anbindungsteile des mehrlagigen Verdecks 2 sind dabei insbesondere die Dachhaut 3, eine unter dieser befindliche Polsterung 11 und eine Innenverkleidung 12 mit nachfolgend näher beschriebenen Halteelementen am Verbindungsprofilkörper 10 festgelegt.

Mit dem erfindungsgemäßen Verbindungsprofilkörper 10 ist erreicht, daß die mit dem Scheibenrahmen 9 eine vormontierte Baugruppe bildende Heckscheibe 4 in einer von den die Anbindungsteile bildenden Lagen des Verdecks 2 unabhängigen Einbauposition am Verbindungsprofilkörper 10 festlegbar ist. Auch bei einer evtl. Demontage zu Reparaturzwecken o. dgl. kann die Heckscheibe 4 mit dem Scheibenrahmen 9 ohne Beeinflussung der Anbindungsteile vom Verbindungsprofilkörper 10 gelöst werde, so daß damit die Haltevorrichtung eine verbesserte Servicefreundlichkeit aufweist.

In der dargestellten Ausführungsform gemäß Fig. 2 und 3 ist der Scheibenrahmen 9 jeweils mit der Heckscheibe 4 über eine an sich bekannte Klebeverbindung 14 vormontiert. Auf seiner zur Klebeverbindung 14 abgewandten Seite weist der Scheibenrahmen 9 einen am Verbindungsprofilkörper 10 festgelegten Gewindestift 19' als Halteteil 15 auf. Dieser Gewindestift 15 ist mit dem Scheibenrahmen 9 im Bereich eines Mittelteils 16 verbunden und dieser zur Scheibenebene A parallel verlaufende Mittelteil 16 liegt formschlüssig auf einem Basisteil 17 des Verbindungsprofilkörpers 10 so auf, daß mittels einer Durchgangsbohrung 18 und einer Mutter 19 eine einfache Schraubverbindung aufgebaut werden kann.

Der Scheibenrahmen 9 weist einen vorderen Klemmschenkel 20 auf, mit dem die Dachhaut 3 des Verdecks 2 durch eine Klemmverbindung in der Einbaulage festgelegt werden kann. Dazu wirkt der Klemmschenkel 20 mit einem am Verbindungsprofilkörper 10 vorgesehenen ersten Stützschenkel 21 zusammen. Im Bereich dieser Klemmverbindung ist zusätzlich ein Dichtungsband 22 vorgesehen, das einerseits an den Klemmschenkel 20 angeklebt ist und andererseits in Pressstellung und/oder durch eine zweite Klebeverbindung auf der Dachhaut 3 bzw. deren im Bereich der Haltevorrichtung 8 erfaßten Randbereich 3' aufliegt. Das zwischen dem Scheibenrahmen 9 und dem Verbindungsprofilkörper 10 befindliche Dichtungsband 22 ist insbesondere dann von Vorteil, wenn die beiden Rahmenteile aus Metall bestehen und damit eine direkte Verklebung der Teile entbehrlich ist.

Der Verbindungsprofilkörper 10 ist im Bereich seines die Stützanlage der Klemmverbindung bildenden Stützschenkels 21 mit einer die Dachhaut 3 im Randbereich 3' untergreifenden Radienkontur R versehen, so daß mit einem Bogenformansatz 24 ein kerbbelastungsfreier Übergang für die Dachhaut 3' erreicht wird. Denkbar ist auch, daß der Stützschenkel 21 unmittelbar den Randbereich 3' der Dachhaut untergreift, und der Formansatz 24 durch einen Anlageradius ersetzt wird.

In der dargestellten Ausführungsform gemäß Fig. 2 und 3 ist im Bereich des Stützschenkels 21 ein Halteprofilteil 23 vorgesehen, das mit dem Randbereich 3' Dachhaut 3 über eine Klebe- oder Nahtverbindung K verbunden ist. Dieses Halteprofilteil 23 ist in seinen Abmessungen und der Dicke variabel, so daß damit eine Anpassung an unterschiedliche, mittels den Halteteilen 15, 19 und dem Klemmschenkel 20 erzeugter Klemmkräfte erreichbar ist. In seiner Einbaulage ist das Haltprofilteil 23 in einer am Stützschenkel 21 durch den Bogenformansatz 24 gebildete Haltenut 26 zusätzlich abgestützt. Diese Festlegung des Halteprofilteiles 23 ist so stabil, daß die Dachhaut 3 auch nach einem Lösen des Scheibenrahmens 9 bzw. dessen Stützschenkel 20 aus der dargestellten Verbindungsstellung in ihrer Einbaulage fixiert bleibt.

Im Bereich der vorbeschriebenen Klemmverbindung ist ein zusätzliches äußeres Dichtungsteil 27 vorgesehen, das am Seitenrand der Heckscheibe 4 festgelegt, insbesondere verklebt ist und mit einem freien Lippenteil 25 oberseitig auf die Dachhaut 3 im Bereich der Klemmverbindung auflegbar ist. Damit ist der Übergangsspalt B zwischen der Heckscheibe 4 und dem Stützschenkel 21 des Verbindungsprofilkörpers 10 dichtend verschlossen. Der Übergangsspalt B ist besonders schmal ausführbar, wobei der als Toleranzausgleich vorgesehene Lippenteil 25 gleichzeitig als Wasserleitrinne wirksam ist und die darunter befindlichen Dichtungs- und Verbindungsteile schützt.

Die Querschnittsdarstellungen gemäß Fig. 2 und 3 verdeutlichen, daß der Stützschenkel 21 in optimaler Ausrichtung zur Kontur des Faltverdecks 2 bzw. zum Verlauf der Dachhaut 3 und der Scheibenebene A mit einer stumpfwinkligen Schrägstellung (Winkel C) zum Basisschenkel 17 des Verbindungsprofilkörpers 10 bzw. 10' angeordnet ist.

Im Nahbereich des zur Dachhaut 3 gerichteten Stützschenkels 21 ist ein im wesentlichen zu diesem parallel verlaufender und einstückig mit dem Basisschenkel 17 geformter Rastschenkel 28 vorgesehen (parallele Linien P, P'). An dem Rastschenkel 28 ist die die Dachhaut 3 untergreifende Polstermatte 11 mittels eines U-förmigen Halteprofils 29 und jeweiliger Rastnoppen 30 festlegbar. Das Halteprofil 29 der Polstermatte 11 ist in der gemäß Fig. 2 dargestellten Ausführung mit einer Haltefahne 29' versehen, die über eine Schweiß- oder Nähverbindung N mit der Polstermatte 11 verbunden wird. In vorteilhafter Anordnung umfaßt die Polstermatte 11 einen Eckspriegel F des nicht näher dargestellten Verdeckgestänges derart, daß dieser verbessert in die Kontur des Verdecks 2 integriert ist. Eine verbesserte Akustik und thermische Isolierung ist in diesem Bereich bis zur Heckscheibe 4 ebenfalls erreicht.

Auf seiner zum Scheibenrahmen 9 abgewandten Unterseite weist der Verbindungsprofilkörper 10, 10' zwei parallel verlaufende Stützstege 31 und 32 auf, zwischen denen die Schraube 19 des Halteteils 15 vorgesehen ist. Die Länge der Stützschenkel 31 und 32 ist dabei derart bemessen, daß auf deren einen Radius R' aufweisenden Endbereichen die Innenverkleidung 12 des Faltverdecks 2 auflegbar ist. Der Abstand D der beiden Stützstege 31, 32 kann mit geringem Aufwand an unterschiedliche Einbaubedingungen angepaßt werden.

Der Verbindungsprofilkörper 10, 10' ist an seinem zum Bereich der Dachhaut-Klemmung (bei 21) abgewandten Ende mit einem zweiten Rastschenkel 33 versehen, der zur Aufnahme der Innenverkleidung 12 dient. Diese kann dabei über ein Steckprofil 34 auf den zweiten Rastschenkel 33 aufgeschoben und über entsprechende Rastnoppen 35 fixiert werden. Die als Innenhimmel bezeichnete Innenverkleidung 12 ist mit dem Steckprofil 34 durch eine eine Naht N' aufweisende Befestigungsfahne 36 verbunden, deren freier Rand unterhalb der Heckscheibe 4 verläuft. Das Steckprofil 34 ist auf dem Rastschenkel 33 über eine Klemmverbindung lösbar gehalten.

In der Ausführungsform gemäß Fig. 3 wird die Polsterung 11 durch einen angenähten bzw. angeschweißten Keder 37 am Verbindungsprofilkörper 10' festgelegt, wobei dieser Keder 37 an einem am Verbindungsprofilkörper 10' angeschraubten Befestigungsprofil 38 angreift. Zur Festlegung dieses Befestigungsprofils 38 werden in jeweiligen Bohrungen 40 im Bereich des Stützschenkels 21' Schraubbolzen bzw. Nieten 41 eingesetzt und über eine Schraube 42 das Befestigungsprofil 38 mit dem Verbindungsprofilkörper 10' verspannt.

Zur Montage dieser Haltevorrichtung 8 wird als vormontierte Einheit der Scheibenrahmen 9 mit der Heckscheibe 4 bereitgestellt und unterseitig am Scheibenrahmen 9 das Dichtungsband 22 angebracht. Im Randbereich 3' der Dachaut 3 wird das als Steckprofil vorgesehene Halteprofil 23 angenäht bzw. verschweißt und auch an der Innenverkleidung 12 wird das entsprechende Steckprofil 34 angenäht bzw. angeschweißt. An der Polstermatte 11 wird das Halteprofil 29 bzw. der Keder 37 angebracht, so daß die Dachhaut des Faltverdecks 2 insgesamt zur Endmontage vorbereitet ist.

Nach dieser Vorbereitungsphase wird der Verbindungsprofilkörper 10 zuerst mit dem randseitigen Halteprofil 23 im Bereich des Stützschenkels 21 verbunden. Anschließend wird die aus Scheibenrahmen 9 und Heckscheibe 4 bestehende Montageeinheit mittels der Schraubverbindung 15, 19 am Basisschenkel 17 des Verbindungsprofilkörper 10, 10' dadurch festgelegt, daß der Gewindestift 19' von oben in die Durchgangsbohrung 18 eingeführt und die Schraubenmutter 19 von unten aufgeschraubt wird. Die Innenverkleidung 12 und die Polstermatte 11 werden auf dem entsprechenden Gegenprofil 28 bzw. 33 festgeklemmt, wobei in der Ausführungsform gemäß Fig. 3 die Kederverbindung 37 ensprechend montiert wird.

Bei einer Demontage der Heckscheibe 4, beispielsweise zu Reparaturzwecken, ist lediglich die Innenverkleidung 12 vom Verbindungsprofilkörper 10, 10' zu lösen, danach wird die Schraubenmutter 19 gelöst und der Scheibenrahmen 9 kann gemeinsam mit der Heckscheibe 4 nach oben bzw. hinten entnommen werden. Dabei verbleiben sämtliche weiteren Einzelteile in ihrer Einbaulage am Verbindungsprofilkörper 10, 10' und nur die entnommene Baugruppe ist wieder zu montieren.

## Patentansprüche

1. Haltevorrichtung für eine Fahrzeugscheibe, insbesondere für eine aus Festglas bestehende Heckscheibe (4) eines Cabriolet-Fahrzeuges (1), mit zumindest einem die Heckscheibe (4) mittels einer Klebeverbindung (14) aufnehmenden Scheibenrahmen (9) und einem Tragrahmen, an dem zumindest die flexible Dachhaut (3) des Faltverdecks (2) befestigt ist, wobei Anbindungsteile (3, 11, 12) des Verdecks (2) und der mit der Heckscheibe (4) vormontierte Scheibenrahmen (9) mittels jeweiliger Halteteile (15, 23, 29, 34) an Gegengliedern (19, 21, 28, 33) festlegbar sind, **dadurch gekennzeichnet, daß** der Tragrahmen als ein Verbindungsprofilkörper (10; 10') ausgebildet ist, an dem einzeln sowohl die jeweiligen Anbindungsteile (3, 11, 12) des Verdecks (2) als auch der Scheibenrahmen (9) der Heckscheibe festlegbar sind, wobei die Heckscheibe mit dem Scheibenrahmen (9) als vormontierte Baugruppe eine von den Festlegungen der anderen Anbindungsteile (3, 11) des Verdecks weitgehend unabhängige Einbaulage aufweist und die Heckscheibe (4) mit dem Scheibenrahmen (9) als Baugruppe im Bereich der entsprechenden Halteteile (15) vom Verbindungsprofilkörper (10; 10') lösbar und von diesem die Baugruppe zur Außenseite des Verdecks hin abhebbar ist, während verbleibende Anbindungsteile (3, 11) ihre Verbindungsstellung beibehalten.

2. Haltevorrichtung nach Anspruch 1, **dadurch gekennzeichnet, daß** die am Scheibenrahmen (9) befindlichen Halteteile (15) als von der Außenseite des Verdecks (2) zuführbare Steckverbindungsteile vorgesehen sind.

3. Haltevorrichtung nach einem der Ansprüche 1 oder 2, **dadurch gekennzeichnet, daß** der Scheibenrahmen (9) im Bereich seiner zur Klebeverbindung (14) abgewandten Außenseite mit dem eine Durchgangsbohrung (18) am Verbindungsprofilkörper (10; 10') durchgreifenden Halteteil (15) versehen ist.

4. Haltevorrichtung nach einem der Ansprüche 1 bis 3, **dadurch gekennzeichnet, daß** zwischen dem Scheibenrahmen (9) und einem parallel zur Scheibenebene (A) verlaufenden Basisteil (17) des Verbindungsprofilkörpers (10; 10') eine eine Mutter (19) aufweisende Schraubverbindung mit einem Gewindestift (19') als Halteteil (15) vorgesehen ist.

5. Haltevorrichtung nach einem der Ansprüche 1 bis 4, **dadurch gekennzeichnet, daß** der Verbindungsprofilkörper (10; 10') im Verbindungsbereich mit der Dachhaut (3; Randbereich 3') einen Stützschenkel (21) aufweist und in dessen Bereich ein am Randbereich (3') durch eine Klebe- oder Nahtverbindung (K) gehaltenes Halteprofil (23) abgestützt ist.

6. Haltevorrichtung nach einem der Ansprüche 1 bis 5, **dadurch gekennzeichnet, daß** der Scheibenrahmen (9) einen die Dachhaut (3) des Verdeckaufbaus durch eine zusätzliche Klemmverbindung im Bereich des Halteprofils (23) festlegenden Klemmschenkel (20) aufweist, der mit dem am Verbindungsprofilkörper (10; 10') vorgesehenen Stützschenkel (21) zusammenwirkt.

7. Haltevorrichtung nach Anspruch 6, **dadurch gekennzeichnet, daß** im Bereich der Klemmverbindung ein Dichtungsband (22) vorgesehen ist.

8. Haltevorrichtung nach Anspruch 6 oder 7, **dadurch gekennzeichnet, daß** das im Bereich der Klemmverbindung vorgesehene Dichtungsband (22) oberseitig auf einem Randbereich (3') der Dachhaut (3) auflegbar ist.

9. Haltevorrichtung nach einem der Ansprüche 6 bis 98, **dadurch gekennzeichnet, daß** der Verbindungsprofilkörper (10) im Bereich seines Stützschenkels (21) eine die Dachhaut (3) untergreifende Radienkontur (R) aufweist.

10. Haltevorrichtung nach einem der Ansprüche 6 bis 9, **dadurch gekennzeichnet, daß** am Stützschenkel (21) im Bereich der Radienkontur (R) eine das Halteprofil (23) aufnehmende Haltenut (26) gebildet ist.

11. Haltevorrichtung nach einem der Ansprüche 6 bis 10, **dadurch gekennzeichnet, daß** im Bereich der Klemmverbindung eine am Seitenrand der Heckscheibe (4) außenseitig umlaufende und oberseitig auf die Dachhaut (3) auflegbare Dichtlippe (25) vorgesehen ist.

12. Haltevorrichtung nach einem der Ansprüche 1 bis 11, **dadurch gekennzeichnet, daß** der Stützschenkel (21) mit einer stumpfwinkligen Schrägstellung (C) zum Basisschenkel (17) des Verbindungsprofilkörpers (10; 10') angeordnet ist.

13. Haltevorrichtung nach einem der Ansprüche 1 bis 12, **dadurch gekennzeichnet, daß** am Verbindungsprofilkörper (10) ein parallel zum Stützschenkel (21) verlaufender erster Rastschenkel (28) zur Aufnahme einer die Dachhaut (3) untergreifenden Polstermatte (11) vorgesehen ist.

14. Haltevorrichtung nach einem der Ansprüche 1 bis 13, **dadurch gekennzeichnet, daß** der Verbindungsprofilkörper (10; 10') auf seiner zum Scheibenrahmen (9) abgewandten Unterseite zwei Stützstege (31, 32) aufweist, zwischen denen die Schraubverbindung (15, 19) vorgesehen ist und an deren freien Enden (R') eine Innenverkleidung (12) des Faltverdecks (2) aufliegt.

15. Haltevorrichtung nach einem der Ansprüche 1 bis 14, **dadurch gekennzeichnet, daß** der Verbindungsprofilkörper (10; 10') an seinem zum Bereich der Dachhaut-Klemmung abgewandten Ende einen zweiten Rastschenkel (33) zur Aufnahme der Innenverkleidung (12) aufweist.

## Claims

1. Retaining arrangement for a vehicle window-pane, particularly for a rear window-pane (4), composed of solid glass, of a convertible vehicle (1), which arrangement has at least one window-pane frame (9) which holds the window-pane (4) by means of an adhesive-bonded connection (14), and at least one supporting frame to which at least the flexible roof skin (3) of the folding top (2) is fastened, the window-pane frame (9), which is pre-assembled to the rear window-pane (4), and connecting parts (3, 11, 12) of the folding top (2) being able to be fixed to companion members (19, 21, 28, 33) by means of respective retaining parts (15, 23, 29, 34), **characterised in that** the supporting frame takes the form of a profiled connecting body (10, 10') to which both the window-pane frame (9) of the rear window-pane and also the individual connecting parts (3, 11, 12) of the folding top (2) can be individually fixed, the rear window-pane and the window-pane frame (9) having, as a pre-assembled assembly, an installed position which is largely independent of the ways in which the other connecting parts (3, 11) of the folding top are fixed in place, and the rear window-pane (4) and the window-pane frame (9) being detachable, as an assembly, from the profiled connecting body (10, 10') in the region of the relevant retaining parts (15), and the assembly being able to be lifted away from the said profiled connecting body (10, 10') towards the outside of the folding top while the remaining connecting parts (3, 11) remain in their connecting position.

2. Retaining arrangement according to claim 1, **characterised in that** the retaining parts (15) present at the window-pane frame (9) are provided in the form of insertable connecting parts which can be fed in from the outside of the folding top (2).

3. Retaining arrangement according to either of claims 1 and 2, **characterised in that** the window-pane frame (9) is provided with the retaining part (15), which latter passes through a through-hole (18) in the profiled connecting body (10, 10'), in the region of its outer face remote from the adhesive-bonded connection (14).

4. Retaining arrangement according to one of claims 1 to 3, **characterised in that** a screwed connecting means having a threaded shank (19') and a nut (19) is provided as a retaining part (15) between the window-pane frame (9) and a base part (17) of the profiled connecting body (10, 10'), which base part (17) extends parallel to the plane (A) of the window-pane.

5. Retaining arrangement according to one of claims 1 to 4, **characterised in that**, in the region where it is connected to the roof skin (3, edge region 3'), the profiled connecting body (10, 10') has a supporting rib (21), and a retaining profile (23) which is held to the edge region (3') by an adhesive-bonded or sewn connection (K) is supported in the region of the said supporting rib (21).

6. Retaining arrangement according to one of claims 1 to 5, **characterised in that** the window-pane frame (9) has a clamping arm (20) which fixes the roof skin (3) of the folding-top structure in position in the region of the retaining part (23) by means of an additional clamped connection and which co-operates with the supporting rib (21) which is provided on the profiled connecting body (10, 10').

7. Retaining arrangement according to claim 6, **characterised in that** a sealing strip (22) is provided in the region of the clamped connection

8. Retaining arrangement according to claim 6 or 7, **characterised in that** the sealing strip (22) which is provided in the region of the clamped connection can be applied to the upper side of an edge region (3') of the roof skin (3).

9. Retaining arrangement according to one of claims 6 to 8, **characterised in that** the profiled connecting body (10) has, in the region of its supporting rib (21), a radiused contour (R) which fits under the roof skin (3).

10. Retaining arrangement according to one of claims 6 to 9, **characterised in that** a retaining groove (26) which receives the retaining profile (23) is formed in the supporting rib (21) in the region of the radiused contour (R).

11. Retaining arrangement according to one of claims 6 to 10, **characterised in that** a sealing lip (25) which extends round the outside of the side-edge of the rear window-pane (4) and which can be applied to the upper side of the roof skin (3) is provided in the region of the clamped connection.

12. Retaining arrangement according to one of claims 1 to 11, **characterised in that** the supporting rib (21) is arranged in a position (C) in which it is inclined at an obtuse angle to the base part (17) of the profiled connecting body (10, 10').

13. Retaining arrangement according to one of claims 1 to 12, **characterised in that** there is provided on the profiled connecting body (10) a first interengaging rib (28) extending parallel to the supporting rib (21), to receive a sheet of padding (11) which fits under the roof skin (11).

14. Retaining arrangement according to one of claims 1 to 13, **characterised in that**, on its underside remote from the window-pane frame (9), the profiled connecting body (10, 10') has two supporting ridges (31, 32), between which the screwed connecting means (15, 19) is provided and against whose free ends (R') an inner lining (12) of the folding top (2) rests.

15. Retaining arrangement according to one of claims 1 to 14, **characterised in that** the profiled connecting body (10, 10') has, at its end remote from the region where the roof skin is clamped, a second interengaging rib (33) to receive the inner lining (12).

## Revendications

1. Dispositif de maintien pour une fenêtre de véhicule, en particulier pour une lunette arrière (4) constituée de verre rigide d'un véhicule convertible (1), comportant au moins un encadrement de fenêtre (9) recevant la lunette arrière (4) à l'aide d'une liaison collée (14) et un cadre porteur sur lequel est fixée au moins la couverture de toit flexible (3) un toit pliant (2), moyennant quoi des éléments d'attache (3, 11, 12) un toit pliant (2) et l'encadrement de fenêtre (9) prémonté avec la lunette arrière (4) peuvent être fixés sur des éléments pendants (19, 21, 28, 33) à l'aide d'éléments de maintien (15, 23, 29, 34) respectifs, **caractérisé en ce que** le cadre porteur est configuré sous la forme d'un corps profilé d'assemblage (10 ; 10') sur lequel peuvent être fixés individuellement aussi bien les éléments d'attache (3, 11, 12) respectifs un toit pliant (2) que l'encadrement de fenêtre (9) de la lunette arrière, moyennant quoi la lunette arrière avec l'encadrement de fenêtre (9) présente, sous la forme d'un module prémonté, une position de montage largement indépendante des fixations des autres éléments d'attache (3, 11) un toit pliant, et la lunette arrière (4), avec l'encadrement de fenêtre (9), est amovible sous la forme d'un module dans la zone des éléments de maintien (15) correspondants par rapport au corps profilé d'assemblage (10 ; 10'), et le module peut être retiré de celui-ci vers la face extérieure un toit pliant, tandis que les éléments d'attache restants (3, 11) conservent leur position d'assemblage.

2. Dispositif de maintien selon la revendication 1, **caractérisé en ce que** les éléments de maintien (15) se trouvant sur l'encadrement de fenêtre (9) sont prévus sous la forme d'éléments d'assemblage par emboîtement pouvant être introduits à partir de la face extérieure de la capote (2).

3. Dispositif de maintien selon l'une quelconque des revendications 1 ou 2, **caractérisé en ce que** l'encadrement de fenêtre (9), dans la zone de sa face extérieure opposée à la liaison collée (14), est doté de l'élément de maintien (15) passant au travers d'un alésage traversant (18) sur le corps profilé d'assemblage (10 ; 10').

4. Dispositif de maintien selon l'une quelconque des revendications 1 à 3, **caractérisé en ce que**, entre l'encadrement de fenêtre (9) et un élément de base (17) s'étendant parallèlement au plan de la fenêtre (A) du corps profilé d'assemblage (10 ; 10'), il est prévu un assemblage par vis présentant un écrou (19) avec une tige filetée (19') constituant l'élément de maintien (15).

5. Dispositif de maintien selon l'une quelconque des revendications 1 à 4, **caractérisé en ce que** le corps profilé d'assemblage (10 ; 10'), dans la zone d'assemblage avec la couverture de toit (3 ; zone de bord 3') présente une branche d'appui (21) et, dans cette zone repose un profilé de maintien (23) maintenu sur la zone de bord (3') par l'intermédiaire d'une liaison collée ou soudée (K).

6. Dispositif de maintien selon l'une quelconque des revendications 1 à 5, **caractérisé en ce que** l'encadrement de fenêtre (9) présente une branche de serrage (20) fixant la couverture de toit (3) de l'agencement de capote par l'intermédiaire d'un assemblage par serrage supplémentaire dans la zone du profilé de maintien (23), lequel coopère avec la branche d'appui (21) prévue sur le corps profilé d'assemblage (10 ; 10').

7. Dispositif de maintien selon la revendication 6, **caractérisé en ce que**, dans la zone de l'assemblage par serrage, il est prévu une bande d'étanchéité (22).

8. Dispositif de maintien selon l'une quelconque des revendications 6 ou 7, **caractérisé en ce que** la bande d'étanchéité (22) prévue dans la zone de l'assemblage par serrage peut être installée, en haut, sur une zone de bord (3') de la couverture de toit (3).

9. Dispositif de maintien selon l'une quelconque des revendications 6 à 8, **caractérisé en ce que** le corps profilé d'assemblage (10) présente, dans la zone de sa branche d'appui (21), un contour de rayon (R) sous-jacent à la couverture de toit (3).

10. Dispositif de maintien selon l'une quelconque des revendications 6 ou 9, **caractérisé en ce que**, sur la branche d'appui (21), dans la zone de contour du rayon (R), est formée une rainure de maintien (26) recevant le profilé de maintien (23).

11. Dispositif de maintien selon l'une quelconque des revendications 6 à 10, **caractérisé en ce que**, dans la zone de l'assemblage par serrage, est prévue une lèvre d'étanchéité entourant à l'extérieur le bord latéral de la lunette arrière (4) et pouvant être installée par le haut sur la couverture de toit (3).

12. Dispositif de maintien selon l'une quelconque des revendications 1 à 11, **caractérisé en ce que** la branche d'appui (21) est disposée selon une position oblique (C) en formant un angle obtus par rapport à la branche de base (17) du corps profilé d'assemblage (10 ; 10').

13. Dispositif de maintien selon l'une quelconque des revendications 1 à 12, **caractérisé en ce que**, sur le corps profilé d'assemblage (10), est prévue une première branche d'encliquetage (28) s'étendant parallèlement à la branche d'appui (21), permettant de recevoir un matelas de rembourrage (11) sous-jacent à la couverture de toit (3).

14. Dispositif de maintien selon l'une quelconque des revendications 1 à 13, **caractérisé en ce que** le corps profilé d'assemblage (10 ; 10') présente, sur sa face inférieure opposée à l'encadrement de fenêtre (9), deux barres d'appui (31, 32), entre lesquelles est prévu l'assemblage par vis (15, 19), et sur les extrémités libres (R') de laquelle repose un habillage intérieur (12) de la capote (2).

15. Dispositif de maintien selon l'une quelconque des revendications 1 à 14, **caractérisé en ce que** le corps profilé d'assemblage (10 ; 10') présente, sur son extrémité opposée à la zone de serrage de la couverture de toit, une deuxième branche d'encliquetage (33) permettant de recevoir l'habillage intérieur (12).
